Europäisches Patentamt

European Patent Office

Office européen des brevets

(19)

(11) EP 0 620 226 B1

(12) EUROPÄISCHE PATENTSCHRIFT

(45) Veröffentlichungstag und Bekanntmachung des Hinweises auf die Patenterteilung:
16.12.1998 Patentblatt 1998/51

(51) Int Cl.⁶: C07F 7/16, B01J 23/72

(21) Anmeldenummer: 94105643.4

(22) Anmeldetag: 13.04.1994

(54) **Verfahren zur Herstellung von Methylchlorsilanen**

Process for the preparation of methylchlorosilane

Procédé de préparation de méthylchlorosilanes

(84) Benannte Vertragsstaaten:
DE ES FR GB IT

(30) Priorität: 16.04.1993 DE 4312494

(43) Veröffentlichungstag der Anmeldung:
19.10.1994 Patentblatt 1994/42

(73) Patentinhaber: Hüls Silicone Gesellschaft mit beschränkter Haftung
01612 Nünchritz (DE)

(72) Erfinder:
• Brumme, Johannes, Dr. rer. nat.
D-01169 Dresden (DE)
• Nürnberg, Peter, Dr.-Ing
D-01612 Nünchritz (DE)
• Tamme, Gudrun
D-01468 Boxdorf (DE)
• Schenk, Annerose
D-01612 Nünchritz (DE)

(74) Vertreter: Zöllner, Gudrun
Hüls Silicone
Gesellschaft mit beschränkter Haftung
Friedrich-von Hayden-Platz 1
D-01612 Nünchritz (DE)

(56) Entgegenhaltungen:
EP-A- 0 001 995          EP-A- 0 191 502
EP-A- 0 304 144          EP-A- 0 416 406
EP-A- 0 440 414          GB-A- 2 119 808
GB-A- 2 153 697          US-A- 4 450 282
US-A- 4 504 597

**Beschreibung**

Die Erfindung betrifft ein Verfahren zur Herstellung von Methylchlorsilanen durch Umsetzung von zerkleinertem Siliciummetall mit Methylchlorid in Gegenwart eines kupferhaltigen Katalysatorsystems und gegebenenfalls weiteren bekannten Zusätzen.

Bei der Herstellung von Organohalosilanen, insbesondere bei der Synthese von Methylchlorsilanen nach Müller und Rochow durch kupferkatalysierte Umsetzung von zerkleinertem Siliciummetall mit Methylchlorid bei erhöhten Temperaturen, entstehen monomere Verbindungen der allgemeinen Formel $Me_nSiCl_{4-n}$ mit n = 0 bis 4 sowie $Me_nHSiCl_{3-m}$ mit m = 0 bis 2. Zielprodukt dieser Reaktion ist Dimethyldichlorsilan ($Me_2SiCl_2$), welches in hohen Ausbeuten erhalten werden soll.

Es ist bekannt, als Katalysator für die Direkte Synthese der Methylchlorsilane einen partiell oxidierten Kupferkatalysator mit einem hohen bzw. mittleren Anteil an Kupfer(I)-Oxid zu verwenden, der in der Regel durch gezielte Oxidation eines gesinterten Kupferpulvers hergestellt wird.

Das EP 141 658 beansprucht die folgende Katalysatorzusammensetzung:

75 bis 95 Gew.-% Kupfer(I)-Oxid
2 bis 10 Gew.-% Kupfer(II)-Oxid
2 bis 15 Gew.-% metallisches Kupfer.

Im EP 440 414 wird ein Katalysatorsystem verwendet, das 45,5 Gew.-% Kupfer-(I)-Oxid, 36,9 Gew.-% Kupfer(II)-Oxid sowie 19,6 Gew.-% metallisches Kupfer enthält und dem erfindungsgemäß Kupfersalze, wie z.B. Chlorid und/ oder Formiat, zugemischt werden.

Den Zusatz von Zinksalzen zu einem oxidischen Kupferkatalysator mit 55 bzw. 76 Gew.-% Kupfer(I)-Oxid, 37 bzw. 15 Gew.-% Kupfer(II)-Oxid sowie 8 bzw. 9 Gew.-% metallischem Kupfer beansprucht EP 304 144.

Weitere Katalysatorzusammensetzungen aus partiell oxidiertem und metallischem Kupfer werden in den folgenden Patenten beschrieben:

US 4 450 282:

30 bis 50 Gew.-% Kupfer(I)-Oxid
30 bis 50 Gew.-% Kupfer(II)-Oxid
10 bis 20 Gew.-% metallisches Kupfer,

US 4 500 724:

57 bis 59 Gew.-% Kupfer(I)-Oxid
32 bis 53 Gew.-% Kupfer(II)-Oxid
5 bis 10 Gew.-% metallisches Kupfer
350 ppm Eisen
54 ppm Zinn
22 ppm Blei,

DE 33 12 775:

30 bis 50 Gew.-% Kupfer(I)-Oxid
30 bis 50 Gew.-% Kupfer(II)-Oxid
10 bis 20 Gew.-% metallisches Kupfer
0,25 bis 4 Teile Kupferformiat.

Außer den monomeren Verbindungen entstehen bei der Direkten Synthese von Methylchlorsilanen höhersiedende Nebenprodukte, deren hauptsächliche Bestandteile Methylchlordisilane der allgemeinen Formel $Me_rCl_sSi_2$ mit r=1 bis 6 und s+r=6 sind. Bei der üblicherweise angewandten basisch katalysierten Spaltung kann jedoch nur ein Teil dieser sogenannten Disilanfraktion in monomere Verbindungen überführt werden.

Es ist der Fachwelt bekannt, daß die höhersiedenden Nebenprodukte im wesentlichen aus etwa 60 Gew.-% 1,1,2,2-Tetrachlordimethyldisilan ($MeCl_2SiSiCl_2Me$) und etwa 30 Gew.% 1,1,2-Trichlortrimethyldisilan ($Me_2ClSiSiCl_2Me$) bestehen, und somit bei der basisch katalysierten Spaltung mit Chlorwasserstoff hauptsächlich Methyldichlorsilan und Methyltrichlorsilan (Gleichung 2) erhalten werden (R. Calas, J. Dunogues, G. Deleris, J. Organomet. Chem., 225 (1982), S. 117 - 130).

$$1) \quad Me_2ClSiSiCl_2Me + HCl \rightarrow Me_2SiCl_2 + MeHSiCl_2$$

$$2) \quad MeCl_2SiSiCl_2Me + HCl \rightarrow MeSiCl_3 + MeHSiCl_2$$

Im Hinblick auf eine möglichst hohe Ausbeute an Dimethyldichlorsilan (Gleichung 1) in der Spaltung der höhersiedenden Nebenprodukte bei einem relativ kleinen Verhältnis von Methyltrichlorsilan zu Dimethyldichlorsilan (T/D-Verhältnis) wird ein großer Anteil an 1,1,2-Trichlortrimethyldisilan in den höhersiedenden Nebenprodukten angestrebt, ohne dabei jedoch die Menge und Zusammensetzung der monomeren Zielprodukte in der Direkten Synthese von Methylchlorsilanen negativ zu beeinflussen.

Es gelingt gem. DE 33 12 775 durch Einsatz von Kupferformiat in Kombination mit partiell oxidiertem Kupfer ein rohes Methylchlorsilangemisch mit einem stark verminderten prozentualen Anfall an höhersiedenden Fraktionen zu gewinnen, wobei jedoch der Anteil an spaltbaren Disilanen (1,1,2,2-Tetrachlordimethyl- und 1,1,2-Trichlortrimethyldisilan) in diesen Fraktionen im wesentlichen der gleiche ist wie bei Verwendung des partiell oxidierten Kupferkatalysators ohne Zusatz.

EP 0 191 502 beschreibt die Umsetzung von einem, Katalysator, Zinn und einen Promotor enthaltenden, aktivierten Silicium mit Organohalid. Der Nachteil dieses Verfahrens besteht darin, daß durch die Aktivierungphase, die ein zusätzlicher Verfahrensschritt darstellt, ca. 8 bis 10 % des eingesetzten Siliciums zu reinem Chlorsilan umgesetzt werden und damit der Reaktion zu Organochlorsilan nicht mehr zur Verfügung stehen.

Aufgabe der Erfindung war das Auffinden eines Verfahrens zur Herstellung von Methylchlorsilanen in Gegenwart eines kupferhaltigen Katalysatorsystems, welches unter Beibehaltung einer hohen Selektivität bezüglich des primären Zielproduktes Dimethyldichlorsilan sowie einer hohen Kontaktmassenproduktivität einen hohen Anteil an 1,1,2-Trichlortrimethyldisilan in den höhersiedenden Nebenprodukten gewährleistet.

Erfindungsgemäß wird ein Katalysatorsystem, bestehend aus Kupfer(I)- und Kupfer(II)-Oxid sowie metallischem Kupfer, eingesetzt, welches einen Anteil an metallischem Kupfer von 35,2 bis 78,4 Gew.-%, aufweist. Bevorzugt werden 2 bis 10 Gew.-teile des Katalysatorsystems auf 100 Gew.-teile Silicium eingesetzt.

Alle anderen Parameter der Reaktionsführung können in den üblichen Grenzen belassen werden. Vorteilhafterweise wird ein partiell oxidierter Kupferkatalysator üblicher Zusammensetzung mit der zum Erreichen der gewünschten Endkonzentration erforderlichen Menge an metallischem Kupfer ohne Mahlung oder andere energieintensive Verfahren mechanisch vermischt.

Das zerkleinerte Silicium wird vorzugsweise mit einer Reinheit von mindestens 98 Gew.-% im Fließbettreaktor bei Temperaturen im Bereich von 250 bis 350 °C kontinuierlich und bevorzugt unter einem Druck von 0,1 bis 0,6 MPa mit gasförmigem Methylchlorid in Gegenwart des erfindungsgemäßen Katalysatorsystems umgesetzt. Zusätzlich können bekannte Promotoren, wie Zinn, Zink, Phosphor oder Antimon, in den üblichen Mengen eingesetzt werden.

Vorteile der Erfindung bestehen neben einer hohen Dimethyldichlorsilan-Selektivität (verbessertes T/D-Verhältnis) und Kontaktmassen-Produktivität in einem großen Anteil an 1,1,2-Trichlortrimethyldisilan in den höhersiedenden Nebenprodukten. Das daraus mittels Spaltung gewonnene Dimethyldichlorsilan verbessert damit gleichzeitig die Ausnutzung der zur Direkten Synthese eingesetzten Rohstoffe Siliciummetall und Methylchlorid.

Ausführungsbeispiele

In einem Labor-Wirbelschichtreaktor mit einem Innendurchmesser von 40 mm wurde ein Gemisch aus 269 g gemahlenem Siliciummetall eines mittleren Durchmessers von 50 μm und Kupferkatalysator bei Temperaturen von 315 °C und 345 °C mit Methylchlorid, das mit einem Volumenstrom von 65 l/h die Kontaktmasse fluidisiert, umgesetzt. Die entstandenen Methylchlorsilane sowie leicht- und höhersiedende Nebenprodukte wurden bei einer Temperatur von etwa -25 °C aus dem Gasstrom, der den Reaktor verließ, auskondensiert und anschließend gaschromatografisch analysiert.

Die in den Tabellen angegebenen T/D-Verhältnisse (Methyltrichlorsilan zu Dimethyldichlorsilan) wurden jeweils als Mittelwerte der 1. bis 5. Stunde (A) und der 5. Stunde (B) gemessen. Die Produktivitätswerte beziehen sich auf den Gesamtanfall von methylchloridfreiem Ofenkondensat in der 1. bis 5. Stunde je kg Kontaktmasse und Reaktionsstunde.

Beispiel 1 (nicht erfindungsgemäß)

Als Kupferkatalysator wurden 13,3 g eines durch Mahlen von hochreinem Elektrolyt-Kupfer hergestellten Kupferpulvers eingesetzt.
Das Gemisch der erhaltenen Methylchlorsilane wies die in Tabelle 1 dargestellte Zusammensetzung auf.

Tabelle 1

| Temperatur (°C) | Produktivität (g.kg$^{-1}$.h$^{-1}$) | | T/D Verhältnis | Gew.-Verhältnis Me$_3$Cl$_3$Si$_2$/Me$_2$Cl$_4$Si$_2$ |
|---|---|---|---|---|
| 315 | 80 | A | 0,29 | 1 : 2,5 |
| | | B | 0,15 | |
| 345 | 172 | A | 0,36 | 1 : 1,7 |
| | | B | 0,33 | |

Beispiel 2 (nicht erfindungsgemäß)

Eingesetzt wurden 13,3 g eines partiell oxidierten Kupferoxid-Katalysators folgender Zusammensetzung:

75,8 Gew.-% Kupfer(I)-Oxid,
10,6 Gew.-% Kupfer(II)-Oxid,
13,6 Gew.-% metallisches Kupfer.

Das Gemisch der Methylchlorsilane wies die in Tabelle 2 dargestellte Zusammensetzung auf.

Tabelle 2

| Temperatur (°C) | Produktivität (g.kg$^{-1}$.h$^{-1}$) | | T/D Verhältnis | Gew.-Verhältnis Me$_3$Cl$_3$Si$_2$/Me$_2$Cl$_4$Si$_2$ |
|---|---|---|---|---|
| 315 | 52 | A | 0,10 | 1,7 : 1 |
| | | B | 0,06 | |
| 345 | 90 | A | 0,13 | 2,2 : 1 |
| | | B | 0,11 | |

Beispiel 3 (erfindungsgemäß)

Eingesetzt wurden 13,3 g des erfindungsgemäßen Katalysatorsystems, bestehend aus dem partiell oxidierten Kupferoxid-Katalysator analog Beispiel 2 und dem metallischem Kupfer analog Beispiel 1, wobei die Zusammensetzung in Abhängigkeit des gewünschten Gesamtanteils an metallischem Kupfer im Katalysatorsystem (s. Tabelle 3, Spalte 2) variiert wurde.
Das Gemisch der Methylchlorsilane wies die in Tabelle 3 dargestellte Zusammensetzung auf.

Tabelle 3

| Temperatur (°C) | metall. Kupfer (Gew.-%) | Produktivität (g.kg$^{-1}$.h$^{-1}$) | | T/D Verhältnis | Gew.-Verhältnis Me$_3$Cl$_3$Si$_2$/Me$_2$Cl$_4$Si$_2$ |
|---|---|---|---|---|---|
| 315 | 56,8 | 86 | A | 0,07 | 1,6 : 1 |
| | | | B | 0,05 | |
| 315 | 56,8 | 86 | A | 0,07 | 1,6 : 1 |
| | | | B | 0,04 | |
| 345 | 56,8 | 117 | A | 0,10 | 2,9 : 1 |
| | | | B | 0,09 | |
| 345 | 56,8 | 106 | A | 0,11 | 2,4 : 1 |
| | | | B | 0,08 | |
| 345 | 35,2 | 119 | A | 0,04 | 1,9 : 1 |
| | | | B | 0,04 | |

Tabelle 3   (fortgesetzt)

| Temperatur (°C) | metall. Kupfer (Gew.-%) | Produktivität (g.kg$^{-1}$.h$^{-1}$) | | T/D Verhältnis | Gew.-Verhältnis Me$_3$Cl$_3$Si$_2$/Me$_2$Cl$_4$Si$_2$ |
|---|---|---|---|---|---|
| 345 | 78,4 | 73 | A | 0,06 | 2,3 : 1 |
| | | | B | 0,04 | |

**Patentansprüche**

1. Verfahren zur Herstellung von Methylchlorsilanen durch Umsetzung von zerkleinertem Siliciummetall mit Methylchlorid in Gegenwart eines Katalysatorsystems, bestehend aus Kupfer(I)-und Kupfer(II)-Oxid sowie metallischem Kupfer, und gegebenenfalls weiteren bekannten Zusätzen, dadurch gekennzeichnet, daß der Anteil an metallischem Kupfer im Katalysatorsystem 35,2 bis 78,4 Gew.-% beträgt.

2. Verfahren nach Anspruch 1, dadurch gekennzeichnet, daß
   2 bis 10 Gew.-teile des Katalysatorsystems auf 100 Gew.-teile Silicium eingesetzt werden.

3. Verfahren nach Anspruch 1, dadurch gekennzeichnet, daß das Katalysatorsystem durch mechanisches Vermischen hergestellt wird.

**Claims**

1. Process for producing methyl chlorosilanes by converting comminuted silicon metal with methyl chloride in the presence of a catalyst system consisting of cuprous and cupric oxide and metallic copper, and possibly other known additives, characterized in that the fraction of metallic copper in the catalyst system is 35.2 to 78.4 percent by weight.

2. Process in accordance with Claim 1, characterized in that 2 to 10 parts by weight of the catalyst system are used per 100 parts by weight of silicon.

3. Process in accordance with Claim 1, characterized in that the catalyst system is prepared by mechanical mixing.

**Revendications**

1. Procédé de production de méthylchlorosilane par transformation de silicium métallique pulvérisé et de chlorure de méthyle en présence d'un système catalyseur composé d'oxyde cuivreux et d'oxyde cuivrique ainsi que de cuivre pur et, le cas échéant d'autres substances connues, caractérisé en ce que le pourcentage pondéral du cuivre pur du système catalytique varie entre 35,2 et 78,4 %.

2. Procédé selon la revendication 1, caractérisé en ce que 2 à 10 parties en poids du système catalytique sont utilisées pour 100 parties en poids de silicium.

3. Procédé selon la revendication 1, caractérisé en ce que le système catalytique est produit par mélange mécanique.